(19) Europäisches Patentamt
European Patent Office
Office européen des brevets

(11) Veröffentlichungsnummer : **0 019 753**
**B1**

(12) # EUROPÄISCHE PATENTSCHRIFT

(45) Veröffentlichungstag der Patentschrift : **22.06.83**

(51) Int. Cl.³ : **D 21 H 3/02**, D 06 M 13/50, B 27 K 3/50, C 07 F 7/00

(21) Anmeldenummer : **80102460.5**

(22) Anmeldetag : **06.05.80**

(54) **Imprägniermittel für cellulosehaltiges Material.**

(30) Priorität : **01.06.79 DE 2922343**

(43) Veröffentlichungstag der Anmeldung : **10.12.80 Patentblatt 80/25**

(45) Bekanntmachung des Hinweises auf die Patenterteilung : **22.06.83 Patentblatt 83/25**

(84) Benannte Vertragsstaaten : **AT BE CH DE FR GB IT LI LU NL SE**

(56) Entgegenhaltungen :
**DE A 2 751 803**
**FR A 1 175 340**
**US A 3 083 114**
**US A 3 419 508**
**US A 3 516 854**

(73) Patentinhaber : **DYNAMIT NOBEL AKTIENGESELLSCHAFT**
**Patentabteilung Postfach 1209**
**D-5210 Troisdorf, Bez. Köln (DE)**

(72) Erfinder : **Luthringshauser, Bruno**
**Habichtweg 5**
**D-5205 St. August-Niederpleis (DE)**
Erfinder : **Lindzus, Claus**
**Dürenerstrasse 44**
**D-5000 Köln 41 (DE)**

Anmerkung : Innerhalb von neun Monaten nach der Bekanntmachung des Hinweises auf die Erteilung ( europäischen Patents im Europäischen Patentblatt kann jedermann beim Europäischen Patentamt gegen das erte europäische Patent Einspruch einlegen. Der Einspruch ist schriftlich einzureichen und zu begründen. Er gilt erst eingelegt, wenn die Einspruchsgebühr entrichtet worden ist (Art. 99(1) Europäisches Patentübereinkommen).

Jouve, 18, rue St-Denis, 75001 Paris, France

EP 0 019 753 B1

# Imprägniermittel für cellulosehaltiges Material

Gegenstand der vorliegenden Erfindung ist ein neues Imprägniermittel für cellulosehaltiges Material. Es hat als aktiven Bestandteil monomere Alkylsilane oder deren Oligomere ; seine Wirkung entfaltet es aufgrund des Zusatzes von bestimmten Alkoholaten bestimmter Metalle.

Es ist bereits aus der DE-B 12 77 192 bekannt, cellulosehaltiges Material mit Hilfe von Chlorsilanen zu hydrophobieren. Bei dieser Behandlungsweise setzen sich die Chlorsilane zu Silikonen um, so daß auf der Oberfläche letztendlich ein Silikonüberzug entsteht. Diese Behandlungsweise hat den Nachteil, daß bei ihrer Anwendung saure Reaktionsprodukte entstehen, die in einer anschließenden Neutralisation beseitigt werden müssen.

Es ist weiterhin aus der US-A 35 16 854 bekannt, mit Hilfe von Lösungen von Alkyltrialkoxysilanen Papier oder Textilien wasserabweisend zu machen. Bei der in dieser Patentschrift beschriebenen Verfahrensweise muß das zu imprägnierende Material nach der Behandlung mit der Silanlösung auf Temperaturen oberhalb von 100 °C erhitzt werden, wobei sich auf der Oberfläche dieser Materialien ein Silikonfilm bildet. Auch ist es durch die US-A 30 83 114 bekannt, unter Mitverwendung von Alkoholaten des Titans Textilien zu hydrophobieren. Dabei werden die Titanalkoholate jedoch im Gemisch mit Wachsen eingesetzt und sie müssen zusätzlich noch stabilisiert werden.

Es ist weiterhin auch bereits bekannt, Silikone direkt als Imprägnierungsmittel einzusetzen. Dabei muß man jedoch die Silikone in Form von wässrigen Emulsionen verwenden.

Diese Emulsionen müssen stabilisiert werden. Als Stabilisatoren eignen sich dafür z. B. basische Zirkon- und/oder Titansalze von Monocarbonsäuren (vgl. DE-C 12 85 441 und DE-C 14 69 313). Die Zirkon- und Titansalze haben in diesen Imprägnierungsmitteln die Aufgabe, die Stabilität einer wässrigen Silikon-Emulsion zu erhöhen und damit deren Konzentration und Wirkungsweise zu vergrößern. Die Herstellung dieser Emulsion erfordert jedoch immer noch einen relativ großen technischen Aufwand. Außerdem sind die erhaltenen Emulsionen nicht unbegrenzt lagerfähig.

Es wurde nun ein Imprägniermittel für cellulosehaltiges Material gefunden, das aus einem Gemisch aus Alkyltrialkoxisilanen und Chelaten oder Alkoholaten von Zinn oder von Metallen der III. Hauptgruppe oder der IV und V Nebengruppe des Periodischen Systems der Elemente bestehen. Gegebenenfalls enthält dieses Gemisch auch noch Kieselsäuretetraalkylester. Dieses Gemisch kann als solches oder in Lösung in einem geeigneten organischen Lösungsmittel eingesetzt werden.

Bei Anwendung eines solchen Gemisches als Imprägniermittel für cellulosehaltiges Material ergeben sich nicht mehr die Nachteile der bisher bekannten, oben genannten Imprägniermittel. Die neuen Mittel können direkt eingesetzt werden und es ist keine alkalische Nachbehandlung des imprägnierten Gegenstandes notwendig. Ihre Herstellung ist äußerst einfach und sie lassen sich nahezu unbegrenzte Zeit unter Luftabschluß lagern.

Weiterhin bilden die neuen Imprägnierungsmittel keinen zusammenhängenden, polymeren Film auf der zu behandelnden Oberfläche, wie dies bei Silikonen der Fall ist ; vielmehr dringt das Imprägniermittel in die Poren des Substrats ein und wird dort chemisch verankert ; es läßt sich mechanisch nicht mehr von der Oberfläche entfernen oder gar abziehen.

Die zu behandelnden Oberflächen umfassen Cellulose in reiner Form sowie in allen ihren natürlichen und synthetischen Modifikationen und Verarbeitungsformen. Unter reiner Cellulose sollen beispielsweise Papier, z. B. Filterpapier oder Cellulosefäden verstanden werden, während zu den Modifikationen oder Verarbeitungsformen Produkte wie Pappe, Pappkarton, Holz, Spanplatten, Baumwollfäden oder -gewebe verstanden werden sollen. Besonders gut eignet sich das neue Imprägnierungsmittel zum Hydrophobieren von Papier in allen seinen Verarbeitungsformen, jedoch lassen sich auch bei der Imprägnierung von Holz gute Resultate erzielen. Die Ergebnisse auf Holz lassen sich dadurch noch verbessern, wenn das Imprägnierungsmittel zusätzlich noch bis zu etwa 20 Gew.-%, bezogen auf die Menge an Alkyltrialkoxisilan, Kieselsäuretetraalkylester oder deren Oligomeren mit bis zu 10 Si-Atomen enthält. Bei diesen Tetraalkylestern sind die bevorzugten Alkylgruppen die Methyl- und die Äthylgruppe. Die Oligomeren dieser Kieselsäureester werden durch gesteuerte Teilhydrolyse hergestellt ; sie enthalten bis zu 10 Si-O-Si-Bindungen und haben einen $SiO_2$-Anteil zwischen 29 und 52 %.

Beim Imprägnieren von Papier ist der Zusatz von Kieselsäureestern zusätzlich zum Zusatz von den Metallverbindungen im allgemeinen nicht mehr nötig, weil auch ohne diesen Zusatz bereits eine sehr gute Hydrophobie erzielt wird, die im allgemeinen nicht mehr verbessert braucht. Jedoch kann beim Hydrophobieren von Papieren anstelle der Metallverbindungen der Elemente der IV und V Nebengruppe des Periodischen Systems auch ein Kieselsäureester eingesetzt werden.

Das zu imprägnierende Material braucht vor der Applikation des Imprägnierungsmittels nicht trocken zu sein ; auch feuchte Oberflächen lassen sich erfolgreich mit dem neuen Imprägniermittel hydrophobieren, sofern das Material noch eine genügende Saugwirkung gegenüber der Imprägnierflüssigkeit besitzt.

Die Wirkung der neuen Imprägniermittel beruht auf einem synergistischen Effekt der Einzelsubstanzen des Gemisches. Es ist bekannt, daß Alkyltrialkoxisilane keine oder nahezu keine Imprägnierwirkung gegenüber cellulosehaltigem Material besitzen. Auch Chelate von Titan oder die beanspruchten Metallalkoholate einschließlich der Kieselsäureester zeigen in verdünnten Lösungen nahezu keine hydrophobierende Wirkung, während sie als konzentrierte Lösungen nur ganz geringe hydrophobierende Wirkungen gegenüber Cellulose besitzen. Sobald jedoch Mischungen dieser beiden Verbindungsklassen als Imprägniermittel eingesetzt werden, erhält man eine deutliche Hydrophobierung. Dabei kann das Verhältnis der Mischungsbestandteile sehr breit variiert werden. Die Wirkung zeigt sich bereits bei einem Anteil von 5 Gew.-% Alkyltrialkoxisilan in dem Gemisch und bleibt auch noch erhalten, wenn das Gemisch zu 95 Gew.-% aus Alkyltrialkoxisilanen besteht. Der bevorzugte Bereich liegt jedoch bei einem Verhältnis der beanspruchten Komponenten zwischen 85 : 15 und 15 : 85.

Wenn das Imprägniermittel in einem Lösungsmittel gelöst eingesetzt werden soll, genügen bereits geringe Konzentrationen, um eine Wirkung zu erhalten. So werden bereits durch 0,5 gew.-%ige Lösungen hydrophobierende Effekte bei Papieren erzielt, so daß auch die Möglichkeit besteht, abgestufte Imprägnierungen mit dem neuen Imprägniermittel zu erzeugen. Damit wird es möglich, definierte Imprägniergüten auf Papieren zu erzeugen.

Als Lösungsmittel eignen sich prinzipiell alle Lösungsmittel, in denen Alkyltrialkoxisilane und die genannten Metallverbindungen löslich sind, wie z. B. Alkohole, Äther, Ketone, Kohlenwasserstoffe. Bevorzugte Lösungsmittel sind solche, die mit Wasser mischbar sind, wie z. B. Alkohole mit 1 bis 4 C-Atomen und Aceton.

Die einsetzbaren Alkyltrialkoxisilane entsprechen der Formel

$$R\ Si\ (OR')_3$$

wobei R für einen, ggf. verzweigten Alkylrest mit 1 bis 18 C-Atomen, vorzugsweise 1 bis 10 C-Atomen steht, und R' für einen Alkylrest mit 1 bis 4 C-Atomen steht, der ggf. durch ein oder mehrere Sauerstoffatome unterbrochen sein kann.

Zu den erfindungsgemäß einsetzbaren Chelaten zählen hauptsächlich die Acetylacetonate des Titans, Vanadiums und Zirkons. Es sind jedoch auch die Acetylacetonate des Aluminiums oder des Zinns erfindungsgemäß verwendbar. Auch Gemische dieser Verbindungen können eingesetzt werden, oder Chelate, die diese Verbindungen komplex als Doppelsalze gebunden enthalten. Als Chelatbildner eignen sich auch hydroxylgruppenhaltige organische Verbindungen wie Glycole, Alkanolamine oder Acetessigester.

Die einsetzbaren Metallalkoholate lassen sich durch die Formeln

$$Me^{III}\ (OR)_3,\quad Me^{IV}\ (OR)_4,$$

$$Me^{IV}O\ (OR)_2 \quad \text{und} \quad Me^{V}O\ (OR)_3$$

kennzeichnen, wobei $Me^{III}$ für ein Metall aus der dritten Hauptgruppe, $Me^{IV}$ für ein Metall aus der Gruppe Zinn, Silicium, Titan, Zirkon oder Hafnium und $Me^{V}$ für ein Metall aus der fünften Nebengruppe des Periodischen Systems der Elemente steht und R einen Alkylrest mit 1 bis 8 C-Atomen bedeutet. Es können aber auch die Oligomeren dieser Alkoholate eingesetzt werden, in denen bis zu 10 Me-O-Me-Einheiten vorhanden sind, sofern diese Verbindungen stabil sind, wie z. B. bei den Alkylsilikaten und den Alkyltitanaten.

Die bevorzugten Metallalkoholate sind die Tetraalkyltitanate und deren Oligomeren, wobei die Alkylgruppen zwischen 2 und 6 C-Atome haben können.

Die Herstellung der neuen Imprägniermittel erfolgt auf einfache Weise durch Vermischen der Komponenten und gegebenenfalls Verdünnen mit einem Lösungsmittel. Auch die Anwendung erfolgt auf an sich bekannte Weise durch Streichen, Tauchen oder Sprühen der entsprechenden Lösungen, ggf. auch unter gleichzeitiger Anwendung von erhöhtem oder vermindertem Druck.

Beispiel 1

10 Gew.-Teile Isobutyltrimethoxisilan wurden mit 1 Gew.-Teil $Titan^{IV}$-acetylacetonat [Diisopropoxi-bis-(2,4-pentandionato)titan(IV)] vermischt und eine 10 %ige Lösung in Äthanol hergestellt. Mit dieser Lösung wurde ein Filterpapier (Nr. 1575 von Schleicher & Schüll) getränkt, im Feuchtraum eine Woche gelagert und anschließend eine Stunde bei 80 °C getrocknet.

Auf das so vorbehandelte Filterpapier wurde ein Tropfen Wasser (etwa 0,5 $cm^3$) aufgebracht und mit einem Uhrglas abgedeckt. Der Wassertropfen wurde von dem Papier innerhalb von 21 Stunden nicht aufgesaugt; nach Ablauf dieser Zeit war er verdunstet.

Zum Vergleich wurde ein Filterpapier gleicher Qualität mit einer 1 %igen Lösung von $Titan^{IV}$-acetylacetonat getränkt und in gleicher Weise gelagert und getrocknet. Ein darauf aufgebrachter Wassertropfen wurde innerhalb 13 Minuten vollkommen aufgesaugt und ergab einen Saugfleck von 9,0 cm Durchmesser.

Zum weiteren Vergleich wurde ein Filterpapier gleicher Qualität mit einer 10 %igen Lösung von Isobutyltrimethoxisilan in Äthanol getränkt und in gleicher Weise, wie oben beschrieben, gelagert und getrocknet. Ein darauf aufgebrachter Wassertropfen wurde innerhalb 151 sec aufgesaugt und ergab einen Saugfleck von 6,0 cm Durchmesser.

Beispiel 2

Ein Filterpapier der im Beispiel 1 genannten Qualität wurde mit einer 10 %igen Lösung in Äthanol eines Gemisches aus 50 Gew.-Teilen Isobutyltrimethoxisilan und 50 Gew.-Teilen $Titan^{IV}$-acetylacetonat getränkt. Das Papier wurde eine Woche im Feuchtraum gelagert und anschließend eine Stunde bei 80 °C getrocknet.

Auf das so vorbehandelte Papier wurde ein Wassertropfen aufgebracht und anschließend wurde das Papier mit einem Uhrglas abgedeckt. Innerhalb von 21 Stunden wurde der Tropfen von dem Papier nicht aufgesäugt; anschließend war er verdunstet.

Beispiel 3

Die Arbeitsweise des Beispiels 2 wurde wiederholt mit dem Unterschied, daß ein Gemisch aus einem Gew.-Teil Isobutyltrimethoxisilan und 10 Gew.-Teilen $Titan^{IV}$-acetylacetonat eingesetzt wurde. Der Wassertropfen wurde innerhalb von 27,5 Stunden von dem Papier nicht aufgenommen; anschließend war er verdunstet.

Beispiel 4

Es wurden 1 Gew.-Teil eines im Handel erhältlichen oligomeren Kieselsäuretetraäthylesters mit einem $SiO_2$-Gehalt von 40 % und durchschnittlich 5 Si-O-Si-Einheiten (Handelsprodukt Dynasil® 40 der Dynamit Nobel AG) mit 10 Gew.-Teilen Isobutyltrimethoxisilan vermischt und von dem Gemisch eine 10 %ige Lösung in Äthanol hergestellt. Mit dieser Lösung wurde Filterpapier der in Beispiel 1 genannten Qualität getränkt und 7 Tage lang einer relativen Luftfeuchtigkeit von 95 % ausgesetzt. Anschließend wurde das Papier eine Stunde lang bei 80 °C getrocknet.

Nach dem Trocknen wurde das Papier auf eine Glasplatte aufgelegt und anschließend wurde auf das Papier ein Wassertropfen von etwa 0,5 $cm^3$ aufgebracht. Der Tropfen wurde mit einem Uhrglas abgedeckt. Innerhalb von 24 Stunden wurde der Tropfen von dem Papier nicht aufgesaugt; anschließend war er verdunstet.

Beispiel 5

Es wurden 10 Gew.-Teile Isobutyltrimethoxisilan mit einem Gew.-Teil Butyltitanat vermischt und von diesem Gemisch eine 10 %ige äthanolische Lösung hergestellt. Mit dieser Lösung wurde ein Filterpapier der im Beispiel 1 genannten Qualität getränkt und anschließend bei Raumtemperatur getrocknet.

Nach Ablauf von 24 Stunden wurde auf das Papier ein Wassertropfen von etwa 0,5 $cm^3$ aufgebracht und der Tropfen mit einem Uhrglas abgedeckt. Innerhalb von 24 Stunden war der Tropfen von dem Papier nicht aufgenommen; anschließend war er verdunstet.

Das gleiche Ergebnis wurde erzielt, wenn das Papier nach dem Tränken mit der Imprägnierlösung während 7 Tage einer Feuchtraumlagerung mit 95 % relativer Luftfeuchtigkeit ausgesetzt war und es anschließend während einer Stunde bei 80 °C getrocknet wurde.

Beispiel 6

Es wurde ein Gew.-Teil Octyltriäthoxisilan mit 10 Gew.-Teilen $Titan^{IV}$-acetylacetonat vermischt und von dem Gemisch eine 1 %ige Lösung in Äthanol hergestellt. Mit dieser Lösung wurde ein Filterpapier der im Beispiel 1 genannten Qualität getränkt und das getränkte Papier eine Woche bei einer relativen Luftfeuchtigkeit von 95 % gelagert. Anschließend wurde das Papier eine Stunde bei 80 °C getrocknet.

Auf das trockene Papier wurde ein Wassertropfen von etwa 0,5 $cm^3$ aufgebracht, der daraufhin mit einem Uhrglas abgedeckt wurde. Nach Ablauf von 30 Stunden war der Tropfen von dem Papier nicht aufgesaugt worden; anschließend war er verdunstet.

Zum Vergleich wurde ein Filterpapier gleicher Qualität mit einer 1 %igen Lösung von Octyltriäthoxisilan und ein zweites Filterpapier mit einer 10 %igen Lösung von Octyltriäthoxisilan in Äthanol getränkt und in gleicher Weise wie oben beschrieben, weiterbehandelt. Der Wassertropfen war nach Ablauf von 12 bzw. 25 Minuten von dem Papier aufgesaugt und ergab einen Saugfleck von jeweils etwa 8,5 cm Durchmesser.

Beispiel 7

Die Arbeitsweise des Beispiels 6 wurde mit einem Gemisch aus gleichen Teilen Octyltriäthoxisilan und $Titan^{IV}$-acetylacetonat wiederholt, wobei jedoch einmal eine 10 %ige Lösung in Äthanol und ein zweites Mal eine 0,5 %ige Lösung in Äthanol verwendet wurde. In beiden Fällen wurde der Wassertropfen im Laufe von 30 Stunden von dem Papier nicht aufgenommen. Auch wenn das Papier nicht bei der hohen Luftfeuchtigkeit gelagert wurde, sondern nur 24 Stunden bei Raumtemperatur getrocknet wurde, erhielt man die gleichen Resultate.

Beispiel 8

Das Beispiel 6 wurde wiederholt mit dem Unterschied, daß ein Gemisch aus 10 Gew.-Teilen Octyltriäthoxisilan und 1 Gew.-Teil $Titan^{IV}$-acetylacetonat als 1 %ige äthanolische Lösung eingesetzt wurde. Auch in diesem Fall war der Wassertropfen nach 30 Stunden verdunstet, ohne daß er in das Papier eingedrungen war.

Beispiel 9

Es wurde eine 1 %ige äthanolische Lösung von einem Gemisch aus 10 Gew.-Teilen Octyltriäthoxisilan und 1 Gew.-Teil Butyltitanat hergestellt. Mit dieser Lösung wurde ein Filterpapier getränkt; ein Teil des Papiers wurde bei Raumtemperatur während 24 Stunden trocknen gelassen; ein weiterer Teil wurde einer Feuchtraumlagerung bei 95 % relativer Luftfeuchtigkeit unterworfen und anschließend eine Stunde bei 80 °C getrocknet.

Bei beiden Proben wurde ein Wassertropfen im Laufe von 24 Stunden nicht aufgesaugt; anschließend war er verdunstet.

Beispiel 10

Die Arbeitsweise des Beispiels 6 wurde wiederholt mit einer 1 %igen äthanolischen Lösung eines Gemisches aus gleichen Gew.-Teilen Octyltriäthoxisilan und Vanadin$^{III}$-acetylacetonat. Der Wassertropfen war nach Ablauf von 30 Stunden von dem Papier nicht aufgesaugt worden; anschließend war er verdunstet.

Beispiel 11

Eine Lösung von 20 g Butyltrimethoxisilan in 100 g Äthanol wurde mit 2,5 g einer 75 %igen Lösung von Titan$^{IV}$-acetylacetonat in Isopropanol vermischt. Mit dieser Lösung wurden 2 Hartholzplatten (Kirschbaum) auf ihrer Schnittfläche satt bestrichen, wobei die Schnittflächen einmal einem Radialschnitt und bei der zweiten Platte einem Querschnitt (Hirnschnitt) entsprachen. Anschließend wurden die Platten während 24 Stunden stehen gelassen. Sie wurden daraufhin waagerecht gelagert und es wurde etwa 5 cm$^3$ Wasser auf die behandelte Oberfläche aufgetropft. Das Wasser zog sich zusammen und die Oberfläche des Holzes behielt ihre ursprüngliche Tönung. Nach einer Lagerung von etwa 3 Tagen bei 15 °C war das Wasser verdunstet, ohne daß es in das Holz eingedrungen war.

Der Versuch wurde wiederholt mit dem Unterschied, daß eine Lösung von 10 g Butyltrimethoxisilan, 10 g Kieselsäuretetraäthylester und 2 g Titan$^{IV}$-acetylacetonat in 100 g Äthanol als Imprägnierlösung verwendet wurde. Auch in diesem Fall zog sich das Wasser zusammen und die Oberfläche des Holzes behielt ihre ursprüngliche Tönung. Der Tropfen war erst nach Ablauf von 60 Stunden verdunstet, ohne daß er in die Holzoberfläche eingedrungen war.

Zum Vergleich wurde eine Holzplatte aus dem gleichen Holz auf den gleichen Schnittflächen mit einer 20 %igen äthanolischen Lösung von Butyltrimethoxisilan satt bestrichen und während 24 Stunden stehen gelassen. Daraufhin wurde auf diese Platte etwa 5 cm$^3$ Wasser aufgetropft. Das Wasser verteilte sich sofort über die gesamte Oberfläche hinweg, die dabei eine dunklere Tönung annahm. Nach Ablauf von etwa 24 Stunden beim Lagern der Platte bei Raumtemperatur war das aufgesaugte Wasser wieder verdunstet.

Beispiel 12

Latten aus Nadelholz (Abmessung: 3 × 4 × 5 cm), wurden während 10 Minuten in eine 10 Gew.-%ige Lösung aus gleichen Teilen Isobutyltrimethoxisilan und Titan$^{IV}$-acetylacetonat gelegt und anschließend 7 Tage lang bei einer relativen Luftfeuchtigkeit von 95 % gelagert.

Nach dem letzten Lagern wurden die Latten gewogen und daraufhin während 24 Stunden unter Wasser gelagert. Anschließend wurden sie vom anhaftenden Wasser befreit und wiederum gewogen. Im Durchschnitt haben diese Latten nach der Wasserlagerung, die eine sehr harte Prüfung bedeutet, nur 8 Gew.-% an Wasser aufgenommen.

Zum Vergleich wurden gleiche Holzlatten nur mit einer 10 %igen alkoholischen Lösung von Isobutyltrimethoxisilan bzw. Titan$^{IV}$-acetylacetonat auf die gleiche Weise getränkt und in genau der gleichen Weise weiterbehandelt. Diese Latten nahmen ihm Durchschnitt 28 Gew.-% (beim Behandeln mit Isobutyltrimethoxisilan) bzw. 42 Gew.-% (beim Behandeln mit Titan$^{IV}$-acetylacetonat an Wasser auf.

**Ansprüche**

1. Imprägniermittel für cellulosehaltiges Material auf der Basis von siliciumorganischen Verbindungen, gekennzeichnet durch ein Gemisch von

a) Alkyltrialkoxisilanen der Formel

$$R\ Si\ (OR')_3,$$

in der R einen Alkylrest mit 1 bis 18 C-Atomen und R' einen Alkylrest mit 1 bis 4 C-Atomen darstellt und

b) Chelaten oder Alkoholaten von Zinn oder von Metallen der III. Hauptgruppe oder IV oder V Nebengruppe des Periodischen Systems der Elemente und/oder

c) Kieselsäuretetraalkylestern.

2. Imprägniermittel gemäß Anspruch 1, dadurch gekennzeichnet, daß die Komponente a) in Mengen zwischen 95 und 5 Gew.-% und die Komponenten b) und c) zwischen 5 und 95 Gew.-%, vorzugsweise zwischen 15 und 85 Gew.-%, in dem Gemisch vorhanden sind.

3. Imprägniermittel gemäß einem der Ansprüche 1 oder 2, dadurch gekennzeichnet, daß es als Chelate Acetylacetonate enthält.

4. Imprägniermittel gemäß einem der Ansprüche 1 bis 3, dadurch gekennzeichnet, daß es als Lösung in einem Alkohol vorliegt.

**Claims**

1. Impregnating agent for cellulose-containing material based on organosilicon compounds, characterised by a mixture of

a) alkyl trialkoxysilanes of the formula

$$R\ Si\ (OR')_3,$$

in which R represents an alkyl residue with 1 to 18 C-atoms and R' an alkyl residue with 1 to 4 C-atoms and

b) chelates or alcoholates of main group III or sub-groups IV or V of the periodic system of the elements and/or

c) silicic acid tetraalkyl esters.

2. Impregnating agent according to claim 1, characterised in that component a) in amounts between 95 and 5 per cent by weight and components b) and c) between 5 and 95 per cent by

weight, preferably between 15 and 85 per cent by weight, are provided in the mixture.

3. Impregnating agent according to one of claims 1 or 2, characterised in that it contains acetyl acetonates as chelates.

4. Impregnating agent according to one of claims 1 to 3, characterised in that it is present as a solution in an alcohol.

**Revendications**

1. Matière d'imprégnation pour matériaux cellulosiques, à base de composés organiques de silicium, caractérisée par un mélange :

a) d'alkyltrialcoxysilanes de formule

$$R\ Si\ (OR')_3,$$

dans laquelle R représente un radical alkyle ayant de 1 à 18 atomes de carbone et R' représente un radical alkyle ayant de 1 à 4 atomes de carbone, et

b) de chélates ou d'alcoolates d'étain ou de métaux du Groupe principal III ou des Sous-Groupes IV ou V de la Classification Périodique des éléments, et/ou

c) d'esters tétra-alkyliques de l'acide silicique.

2. Matière d'imprégnation selon la revendication 1, caractérisée en ce que le constituant a) est présent dans le mélange en une quantité comprise entre 95 et 5 % en poids et les constituants b) et c) sont présents dans le mélange en des quantités comprises entre 5 et 95 % en poids, de préférence entre 15 et 85 % en poids.

3. Matière d'imprégnation selon l'une des revendications 1 ou 2, caractérisée en ce qu'elle contient comme chélate de l'acétylacétonate.

4. Matière d'imprégnation selon l'une des revendications 1 à 3, caractérisée en ce qu'elle se présente sous forme de solution dans un alcool.